# EUROPÄISCHE PATENTANMELDUNG

(11) **EP 3 056 252 A1**
(43) Veröffentlichungstag der Anmeldung: **17.08.2016**
(21) Anmeldenummer: 15000453.9
(22) Anmeldetag: 16.02.2015
(51) Int. Cl.: A63C 17/00, A63C 17/01, A63C 17/26, B62K 3/00, B62K 5/05

(54) **Kick Scooter**

(71) Anmelder: Petutschnig, Hubert, 2345 Brunn am Gebirge (AT)
(72) Erfinder: Petutschnig, Hubert, 2345 Brunn am Gebirge (AT)
(74) Vertreter: Bobbert & Partner Patentanwälte PartmbB

(57) **Zusammenfassung**

Roller mit einem Rahmen bestehend aus einem Trittbrett (1), einem Ausleger (2) und einer daran vorgesehenen Lenksäule (3) und zwei in Längsrichtung des Rollers in einem Abstand voneinander liegenden, den Rahmen (1, 2, 3) über Radachsen (15, 16) bzw. (30) abstützenden Radeinheiten (20, 22) und wobei der Roller über einen in der vertikalen Längsmittelebene insbesondere schwenk- und fixierbaren Ausleger (2) mit einer Lenksäule (3, 6) und einem Griffstück (7) verfügt, sowie an am unteren/bodennahen Ende der Lenksäule (3) über eine in der Längsmittelebene des Rollers liegende Platte (10) verfügt, die unter einem vorgegebenen Winkel (α) (23) an der Lenksäule (3) befestigt ist, und eine Drehachse (11) für eine lenkbare vordere, zwei Räder (19a, 19b) aufweisende Radeinheit (20) definiert, wobei die vordere Radeinheit (20) mit dem flächenparallel zur Platte (10) angeordneten Träger (14) um eine Drehachse (11) verschwenkbar ist, sodass bei einem seitlichen Verkippen der Lenksäule (3) und/oder des Trittbrettes (1) ein äquivalentes zwangsweises Verschwenken der Radeinheit (20) in Bezug auf die Längsmittelebene erfolgt.

## Beschreibung

Ziel der Erfindung ist es, einen konstruktiv einfach aufgebauten Tretroller bzw. Scooter zu erstellen, der mit nur einer Hand kurvenstabil zu lenken ist. Tretroller sind wohl bekannt und werden sowohl von Kindern als auch von Erwachsenen für Spiel und Sport verwendet. Derartige Roller besitzen einen Rahmenteil, an dem ein Trittbrett befestigt oder ausgebildet ist. Das Trittbrett und/oder die Rahmenteile tragen eine vordere und eine hintere Radeinheit. Am Rahmen und/oder am Trittbrett ist eine Lenksäule befestigt, die auf dem Rahmenteil und/oder dem Trittbrett verschwenkbar gelagert sein kann, sodass der Roller zusammengeklappt werden kann. Die Lenksäule kann im oberen Lenkbereich mit einem Griff oder einem Lenker versehen sein. An der Lenksäule ist eine vordere Radeinheit, insbesondere am unteren Ende der Lenksäule, angebracht und mittels der Lenksäule bzw. dem am oberen Ende angebrachten Handgriff bzw. Lenker kann durch seitliches Verschwenken der Lenksäule eine Fahrtrichtungsänderung durch ein dem Verschwenken proportionales zwangsweises Verdrehen der Radeinheit herbeigeführt werden.

Ziel der Erfindung ist die Erstellung eines Rollers mit einer Lenktechnik, die ein sportliches Fahren ermöglicht, wobei jedoch die Möglichkeit gegeben sein soll, den Roller auch mit einer Hand sicher lenken zu können, sodass sein Handling verbessert wird. Der erfindungsgemäße Roller soll vor allem die Aufgabe lösen, ein Sportgerät bzw. ein Fortbewegungsmittel zu schaffen, welches den sportlichen Charakter des Benutzers, herausfordert, da eine gewisse Geschicklichkeit, insbesondere ein höheres Gleichgewichtsgefühl als bei einem herkömmlichen Roller erforderlich ist. Ferner soll durch eine einfache Einhandlenkung die Bedienung bzw. der Betrieb erleichtert werden. Des Weiteren sollen durch eine erfindungsgemäße Ausbildung einer lenkbaren Radeinheit sowie deren Aufhängung und Lagerung eine bessere Richtungsstabilität und ein verbessertes Fahrverhalten ermöglicht werden, als dies mit herkömmlichen Rollern möglich ist.

Die Erfindung löst diese Aufgabe mit den im Kennzeichen des Anspruches 1 angeführten Merkmalen. Bei dem erfindungsgemäßen Roller, bei dem aus dem Trittbrett und einem daran angebrachten Ausleger und einer Lenksäule der Rahmen gebildet wird, besitzt die Lenksäule zumindest eine für die Richtungslenkung geeignete Radeinheit. Es ist vorgesehen, dass eine definierte Links- oder Rechtsauslenkung der Radeinheit allein durch das seitliche Kippen des Sportgerätes, das heißt des Trittbrettes und/oder der Lenksäule nach links oder nach rechts erfolgen kann. Die Radeinheit -bestehend aus dem beweglichen Träger mit 2 seitlich abstehenden Achszapfen und den darauf gelagerten Rädern- wird bei einem Kippen des Rahmens bedingt durch eine seitwärts gerichtete Lenkbewegung der Lenksäule durch den ausgeübten Druck um deren Drehachse verschwenkt. Dadurch wird die Radeinheit von ihrer neutralen geradeaus gerichteten Position zwangsweise in eine Richtung ausgelenkt, die der Richtung des aufgebrachten Drucks bzw. der Kippbewegung entspricht.

Die Lenksäule besitzt dazu an ihrem unteren, zum Boden weisenden Ende eine schräg stehende Trageplatte. Es ist zumindest eine für die Richtungslenkung bewegliche Radeinheit vorgesehen, welche im Bereich der definierten Mittelachse der Lenksäule auf der schrägstehenden Platte verdrehbar angebracht ist.

Somit ist vorgesehen, dass der in der senkrecht verlaufenden Ebene um die Mittelachse der Lenksäule verschwenkbare Träger auf der schräg stehenden Platte gelagert oder gelegen ist, welcher die beiden winkelig abstehenden Radachsen trägt oder dass die jeweilige Radachse in der senkrecht verlaufenden Ebene um die Mittelachse der Lenksäule verdrehbar auf dieser gelagert ist und/oder dass bei für Geradeausfahrt ausgerichtetem Roller die Radachsen im Wesentlichen senkrecht zur Mittelebene des Rollers stehen bzw. in einer weiteren bevorzugten Ausführungsform nicht nur winkelig nach oben abstehen, sondern auch winkelig entgegen der Fahrtrichtung nach hinten. Damit wird eine leichtgängige, empfindlich und exakt reagierende Steuerung des Rollers erreicht.

Die hintere Radeinheit ist erfindungsgemäß in konventioneller Bauweise vorgesehen, vergleichbar mit einem Hinterrad einer herkömmlichen Rollerkonstruktion, das auf einer Starrachse bzw. auf einer beweglichen Achse mit druckbeaufschlagter Ausgleichskraft gelagert ist.

Das Verkippen des Trittbretts bzw. des Rahmens mittels der Lenksäule um die Längsachse des Rollers bzw. des Trittbretts erfolgt in der Weise, dass auf das, einen Teil des Rahmens bildende Trittbrett, durch seitliches Verschwenken der Lenksäule oder entsprechende Druckausübung und Verkippen des Trittbrettes eine Kippbewegung des Rahmens um die Längsachse des Rollers hervorgerufen wird, wodurch über die am unteren Ende der Lenksäule winkelig vorgesehene Platte mit der parallel zu dieser Platte verdrehbaren Radeinheit eine Bewegung dieser Radeinheit in Form eines zwangsweisen Verschwenkens nach links oder rechts erreicht wird. Ein Verkippen nach Rechts leitet eine Rechtskurve ein und umgekehrt.

Für die Verbesserung der Fahrtsicherheit ist es von Vorteil, wenn an dem am oberen Ende der Lenkstange vorgesehenen Handgriff eine Betätigungsvorrichtung für eine Handbremsvorrichtung vorgesehen ist.

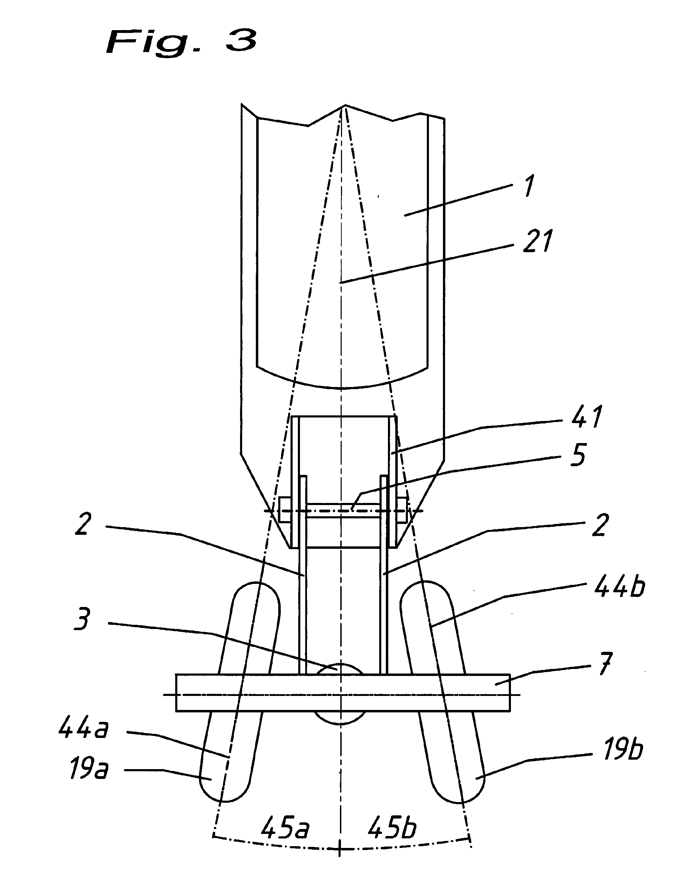

Die Fahreigenschaften des Rollers können stabilisierend beeinflusst werden, indem vorgesehen ist, dass die Radachse auf der Höhe des Trittbretts gelegen ist und/oder dass die Radachsen von in Fahrtrichtung vor und hinter dem Trittbrett liegenden Radeinheiten auf gleichem Niveau und/oder oberhalb des Niveaus des Trittbretts liegen. Die Lenkung wird leichtgängiger und direkter, wenn die beiden Radachsen der vorderen Radeinheit nach hinten abstehen wodurch die beiden Vorderräder an deren Vorderseite einen Öffnungswinkel gem. Fig.3 erhalten.

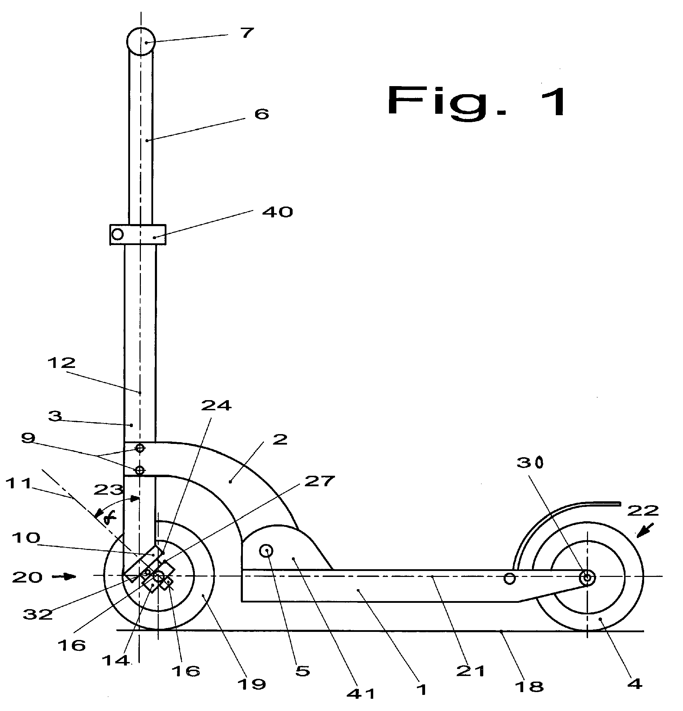

Die Position der am unteren Ende der Lenksäule angebrachten schrägen Platte verläuft von der Seite gesehen (Fig.1, Seitenriss, lenkbare Radeinheit auf der linken Seite) nach hinten aufwärts gerichtet (nach hinten bedeutet entgegen der Fahrtrichtung weisend), und bildet dabei einen Winkel zwischen der Mittelachse der Lenksäule und der Normalen der Platte im Betrage zwischen 20° und 70°, vorzugsweise zwischen 25° und 65°, insbesondere zwischen 30° und 60°. Dieser Winkelbereich ergibt eine gute Bedienbarkeit und Handhabbarkeit des Rollers insbesondere beim Kurvenfahren.

Um ein Übersteuern bzw. das Fahren von Kurven mit zu kleinem Radius bei zu großer seitlicher Verschwenkung der Lenksäule oder bei Ausübung eines zu großen Kippdruckes auf die Trittfläche zu vermeiden, kann vorgesehen sein, dass der Schwenkwinkel der Radeinheit und/oder des Trägers und/oder bezüglich einer vertikalen Achse oder der Achse der Lenksäule von einer Begrenzungseinheit, wie z.B. von einem Anschlag, begrenzt ist.

Eine einfache Bedienung des Rollers ergibt sich, wenn die Lenkstange an ihrem oberen, trittbrettfernen Ende ein quer verlaufendes Griffstück als Haltestück für Einhandbetrieb trägt.

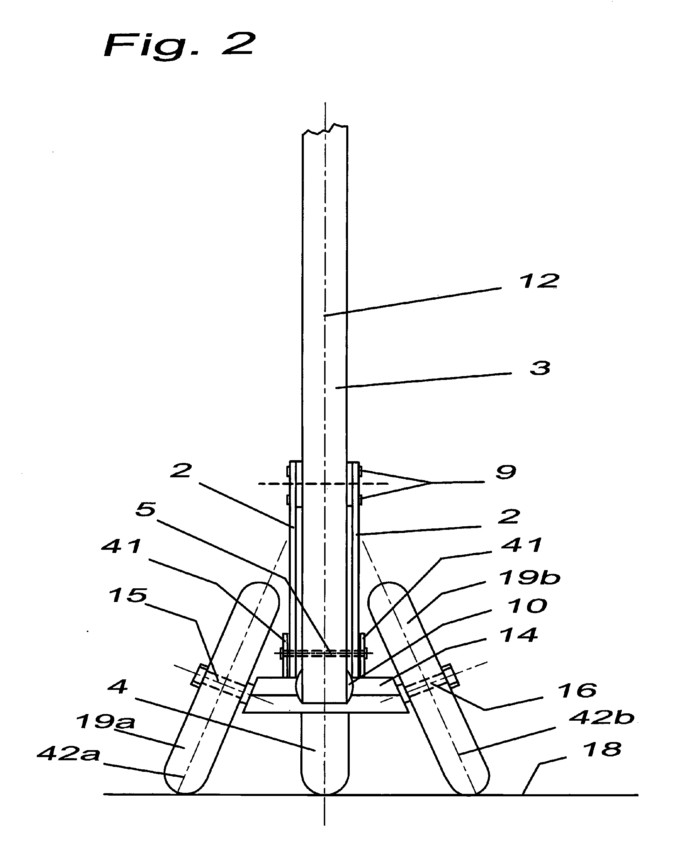

Bei für Geradeausfahrt ausgerichtetem Roller stehen die Radachsen in Längsrichtung (entlang der x-Achse) ohne Korrektur senkrecht- mit Korrektur nach hinten abstehend- zur Längsmittelebene des Rollers ab, weisen aber in der Vertikalebene (entlang der y-Achse) winkelig nach oben, so dass in Folge die beiden Räder der lenkbaren Radeinheit nicht mehr seitenparallel zueinander angeordnet sind, sondern von vorne betrachtet vergleichbar mit dem Großbuchstaben A im oberen Bereich nahe beieinander stehen und im unteren Bereich weiter entfernt sind. Damit wird einerseits eine sichere bzw. eine empfindlich und exakt reagierende Steuerung des Rollers erreicht bzw. wird andererseits das Kippen der Radeinheit bei größeren Kurvenkräften vermieden, weil die in der Kurvenfahrt auf das am äußeren Rad wirkenden Kräfte eben winkelig gegen die befahrene Fläche wirken, wobei sich eine Radaufhängung/Radachse näher am Rollerrahmen befindet als der zum Erdboden weisende untere Auflagepunkt eines Rades (Fig 2).

Die Lenkeigenschaften des Rollers können konstruktiv beeinflusst werden, indem die Radachsen einer Radeinheit entgegen der Fahrtrichtung in einem marginalen Winkelbereich nach hinten (entlang der x-Achse) weisen, sodass die auf den Achsen befindlichen Räder über einen definierten Öffnungswinkel in Fahrtrichtung verfügen. Dadurch sind die vorderen Radspitzen weiter voneinander entfernt als die hinteren.

Im Folgenden wird die Erfindung anhand der Zeichnungen beispielsweise näher erläutert.
Fig. 1 zeigt einen Roller von der Seite (Seitenriss)
Fig. 2 zeigt die vordere Radeinheit des Rollers von vorne (Aufriss)
Fig. 3 zeigt eine Draufsicht (Grundriss)

In den Zeichnungen ist der Roller grundsätzlich in Geradeausfahrt ausgerichtet dargestellt.. Der Roller ist symmetrisch bezüglich seiner Längsmittelebene aufgebaut.

Fig. 1 zeigt einen Roller mit einem Trittbrett 1, das über einen mit diesem fest verbunden bzw. schwenkbaren Ausleger 2 verfügt. Es ist dadurch möglich, das Trittbrett 1 und den Ausleger 2, mit einem Schwenklager 5 bzw. über einen Schwenkbolzen verschwenkbar zu verbinden, um den Roller - wie an sich bekannt - zusammenklappen zu können. Im hinteren Endbereich des Trittbretts 1 ist mit einer starr gelagerten Radachse 3 ein herkömmliches Rad 4 gelagert.

Der Ausleger 2 geht bei dieser Ausführungsform in Fahrtrichtung vom Trittbrett 1 nach vorne und nach oben weisend ab. An diesem Ausleger 2 ist an seinem freien vorderen Ende eine beispielhaft ausgebildete Lenksäule 3 angebracht, die mit dem Ausleger 2, beispielsweise durch Verschraubung oder Verschweißung fest verbunden ist, wobei die Längssäule 3 entgegen der Fahrtrichtung geneigt ist, sodass die vom Roller vertikal abstehende Mittelachse 12 der Lenksäule 3 mit der horizontalen Rollerlängsachse 21 einen Winkel zwischen 70° und 90°, vorzugsweise 75° und 85° insbesondere, 78° bis 82° einschließt. Die Lenksäule 3 verfügt über das Teleskoprohr 6 und dieses ist mittels der Feststellklemme 40 in der gewählten Position festgezogen. Das höhenverstellbare Teleskoprohr 6 trägt an seinem oberen Ende einen beispielhaften Handgriff 7.

Die Lenksäule 3 besitzt am unteren Ende eine schräg stehende Platte 10, wobei die senkrecht zur Platte 10 vertikal stehende Normalachse 11 einen Winkel α zur Mittelachse 12 der Lenksäule 3 einnimmt. Die Einbaulage der am unteren Ende der Lenksäule 3 angebrachten schrägen Platte 10 verläuft somit von der Seite gesehen entgegen der Fahrtrichtung nach hinten aufwärts gerichtet und bildet dabei einen Winkel seiner Normalen 11 mit der Mittelachse 12 der Lenksäule 3 zwischen 20° und 70°, vorzugsweise zwischen 25° und 65°, insbesondere zwischen 30° und 60°. Dieser Winkelbereich ergibt eine gute Bedienbarkeit und Handhabbarkeit des Rollers insbesondere beim Kurvenfahren. Der Winkel zwischen der Mittelachse 12 und der zur Platte 10 stehenden Normalen 11 definiert exakt den Kurvenradius proportional zum seitlichen Kippwinkel der Lenksäule.

Auf der Platte 10 ist der Träger 14 der Radeinheit 20 gelagert, welcher innerhalb eines definierten Bereiches frei drehbar ist, und der die von ihm winkelig abstehenden Radachsen15/16 der vorderen Radeinheit 20 trägt.

Die Lenkung des Rollers basiert im Wesentlichen darauf, dass die hintere und die vordere Radeinheit 20, 4 entlang der Längsmittel- bzw. Symmetrieebene des Rollers insbesondere mittig und fluchtend angeordnet sind, und dass durch ein seitliches Verkippen der Lenksäule 3 bezüglich der Längsachse 21 auch die Platte 10 aus der neutralen Ausgangsposition in eine dem Verkippen entsprechende Richtung mitverkippt wird. Wird beispielsweise die Lenksäule 3 bezüglich der Längsachse 21 nach rechts gekippt, dann folgt die frei drehbare Radeinheit der Richtung der ausgelenkten Platte 10 zwingend gegen die konstant gleichbleibende Position der Aufstandsfläche 18 gegen die die Radeinheit mit der Kraft des auf den Scooter von oben einwirkenden Gewichtes ebenfalls nach rechts.

Die Rate der proportionalen Auslenkung der Radeinheit 20 erfolgt umso stärker, je kleiner der Winkel α / 23 systembedingt gewählt wird. Die Auslenkung der Radeinheit 20 infolge eines Kippens der Lenksäule 3 oder der Trittfläche 1 erfolgt dann in ausreichender Form, wenn, wie in Fig. 2 dargestellt ist, der Abstand A zwischen den beiden Rädern 19a/19b so groß ist, dass die erforderliche Kraft für das Auslenken bzw. Verdrehen der Radeinheit 20 aufgebaut werden kann. Dies bedeutet, dass bei Vergrößerung des Winkels α die Lenkkraft ansteigt und infolgedessen der Abstand A zwischen den beiden Rädern 19a/19b entsprechend größer zu wählen ist.

Die zwangsgesteuerte Verschwenkung des Trägers 14 gegenüber der feststehenden Platte 10 sieht vor, dass sich zwischen den beiden Begrenzungsflächen 26 und 27 eine insbesondere in axiale Richtung wirkende Lagervorrichtung 32 beliebiger Bauart befindet. Der Zusammenhalt dieses, überwiegend axiale Kräfte aufnehmenden Lagers 32, wird durch zumindest ein beispielhaftes Feststellelement 16 beliebiger Bauart sichergestellt. Dieses Feststellelement 16 kann z.B.: aus einer oder mehreren Schrauben oder einer Mutter oder anderen beliebigen Befestigungselementen gebildet werden. Durch die Erhöhung des Drucks zwischen den Anlageflächen 24, 27, wie z.B.: durch das Festziehen einer Mutter oder einer Schraube, kann somit mittels des Feststellelementes 16 die Empfindlichkeit der Lenkung durch Zu- oder Abnahme der Reibungskräfte zwischen den Anlageflächen 24 und 27 und der Lagerung 32 verändert werden, sodass die Richtungssteuerung des Rollers durch beliebige Verstellung des Befestigungselementes 16 innerhalb der zulässigen Grenzen mehr oder weniger leichtgängig eingestellt werden kann.

## Patentansprüche

1. Roller mit einem Rahmen bestehend aus einem Trittbrett (1), dem Ausleger (2) und einer damit fest verbundenen Lenksäule (3) und zwei in Längsrichtung des Rollers in einem Abstand voneinander liegenden, den Rahmen (1, 2, 3) über Radachsen (15, 16) bzw. (30) abstützenden Radeinheiten (20, 22), mit einem in der vertikalen Längsebene des Rollers liegenden, insbesondere schwenk- und fixierbaren Ausleger (2), wobei die Lenksäule (3) mit dem Ausleger (2) fest verbunden ist, und wobei die Lenksäule (3, 6) an ihrem oberen Ende über ein Griffstück (7) sowie an ihrem unteren/bodennahen Ende über eine in der Längsmittelebene des Rollers liegende Platte (10) verfügt, die unter einem konstruktiv vorgegebenen Winkel (α)/(23) an der Lenksäule (3) befestigt ist, und eine Drehachse (11) für eine lenkbare vordere, zwei Räder (19a, 19b) aufweisende Radeinheit (20) definiert ist, welche in bevorzugter Ausführungsform über eine Spur- und Sturzeinstellung verfügt, und wobei die Anlagefläche (27) des Trägers (14) der vorderen Radeinheit (20) parallel zur Oberfläche (24) der Platte (10) um die Drehachse (11) verdrehbar angeordnet ist, sodass bei seitlichem Verkippen der Lenksäule (3) und/oder des Trittbrettes (1) ein äquivalentes zwangsweises Verschwenken der Radeinheit (20) in Bezug auf die Längsmittelebene um die Achse (11) erfolgt, **dadurch gekennzeichnet, dass** die Lenksäule an ihrem unteren/bodennahen Ende über eine mit dieser fest verbundenen ebene Platte (10) verfügt, die einerseits symmetrisch, in einem 90° Winkel quer zur Längsmittelebene steht und die andererseits einen Winkel α (23) zwischen der Normalen (11) der Platte (10) und der Mittelachse (12) der Lenksäule (3) einschließt, wodurch die Platte (10) in Einbaulage nach hinten -entgegen der Fahrtrichtung- in einem Winkel ansteigt, sodass die in Fahrtrichtung weisende Vorderseite der Platte (10) tiefer als deren gegenüberliegende höher liegende Hinterseite liegt, wobei der bewegliche Träger (14) der vorderen Radeinheit (20) mit den von den zwei Radachsen (15, 16) auf diesem Träger (14) getragenen Rädern (19a/19b) flächenparallel zur Fläche (24) der winkeligen Platte (10) bzw. um die Längsmittelebene des Rollers verdrehbar ist.

2. Roller nach Anspruch 1, **dadurch gekennzeichnet, dass** zwischen den beiden Begrenzungsflächen (24) und (27) eine insbesondere axiale Kräfte aufnehmende Lagervorrichtung (32) beliebiger Bauart vorgesehen ist, wobei der Zusammenhalt dieses überwiegend axiale Kräfte tragenden Lagers durch zumindest ein beispielhaftes Feststellelement (16) beliebiger Bauart erfolgt, bzw. dass die Empfindlichkeit der Richtungssteuerung des Rollers durch Verstellung des/der Feststellelemente/s (16) innerhalb der zulässigen mechanischen Grenzen mehr oder weniger leichtgängig eingestellt und fixiert werden kann.

3. Roller nach Anspruch 1 oder 2, **dadurch gekennzeichnet, dass** der Schwenkwinkel der vorderen Radeinheit (20) und/oder des Trägers (14) um die jeweilige Drehachse (11) und/oder bezüglich einer vertikalen Achse oder der Achse der Lenksäule (12) von einer Begrenzungseinheit, z.B. einem Anschlag, begrenzt ist.

4. Roller nach einem der Ansprüche 1 bis 3, **dadurch gekennzeichnet, dass** auf der Platte (10) ein in der senkrecht um die Mittelachse (11) verlaufenden Ebene verschwenkbarer Träger (14) gelagert oder gelegen ist, der die beiden Radachsen (15, 16) der vorderen Radeinheit (20) trägt, oder dass die beiden Radachsen (15, 16) der vorderen Radeinheit (20) in der senkrecht verlaufenden Ebene um die Mittelachse (11) verdrehbar gelagert sind.

5. Roller nach einem der Ansprüche 1 bis 4, **dadurch gekennzeichnet, dass** die Platte (10) über eine in der Längsmittelebene befindliche Öffnung oder ein Gewinde verfügt, worin der Träger (14) an dieser Stelle mittels einer beispielhaften Befestigungsvorrichtung (16) verschwenkbar verschraubt bzw. befestigt ist, oder dass aus der Platte (10) ein beliebiges Befestigungselement zur Aufnahme und Sicherung des Trägers (14) herausragt oder dass der Träger (14) über ein beliebiges Endteil verfügt, oder dass z.B.: eine Lagerhülse ausbildet und mit dem Endteil oder der Lagerhülse um die Drehachse (11) in der Platte (10) gelagert und/oder entlang dieser Drehachse (11) aufgesteckt oder eingesteckt ist.

6. Roller nach Anspruch 4, **dadurch gekennzeichnet, dass** die Radachsen (15, 16) der vorderen Radeinheit (20) zwischen den, auf diesen Radachsen (15, 16) in einem vorgegebenen Abstand (A) gelegenen Rädern (19a, 19b) der Radeinheit (20) am Träger (14) vorgesehen sind.

7. Roller nach Anspruch 1, **dadurch gekennzeichnet, dass** der die Lenksäule (3) tragende Ausleger (2) gegebenenfalls schwenkbar und arretierbar am Trittbrett (1) vorgesehen ist, und sich die Verbindungsstelle zwischen dem Ausleger (2) und der Lenksäule (3) mit beispielhaften Verbindungselementen (9) in Bezug auf das Trittbrett (1) vorne oben befindet, und/oder dass die Lenksäule (3, 6) insbesondere deren oberes Ende (6) über einen Haltegriff (7) verfügt.

8. Roller nach einem der Ansprüche 4 bis 5, **dadurch gekennzeichnet, dass** der Winkel α (23) zwischen der Mittelachse (12) der Lenksäule (3) und der Normalen (11) der Platte (10) zwischen 20° und 70°, vorzugsweise zwischen 25° und 65°, insbesondere zwischen 30° und 60° liegt, wobei die Lenksäule (3) in bevorzugter Ausführungsform entgegen der Fahrtrichtung geneigt ist, sodass die vom Roller vertikal abstehende Mittelachse (12) der Lenksäule (3) mit der horizontalen Rollerlängsachse (21) einen Winkel zwischen 70° und 90°, vorzugsweise 75° und 85° insbesondere, 78° bis 82° einschließt.

9. Roller nach einem der Ansprüche 1 bis 8, **dadurch gekennzeichnet, dass** die Längsachsen (44a, 44b) beiden Räder (19a, 19b) der vorderen Radeinheit (20) in einer weiteren Ausführungsform in der Neutralstellung für Geradeausfahrt nicht exakt parallel zur Längsachse (21) des Scooters verlaufen, sondern von oben drauf in Fahrtrichtung gesehen jedes der beiden Räder (19a, 19b) mit einem nach hinten weisenden Scheitel über einen geringen Öffnungswinkel (45a, 45b) im Bereich zwischen circa 0,1 und 5 Grad pro Rad verfügen, sodass die beiden Räder (19a, 19b) der Radeinheit (20) in Fahrtrichtung an deren vorderen Bereichen einen größeren Abstand aufweisen als an deren hinteren Bereichen.

10. Roller nach einem der Ansprüche 1 bis 9, **dadurch gekennzeichnet, dass** die von den winkelig abstehenden Achszapfen (15, 16) getragenen Räder (19a, 19b) geneigt vorgesehen sind (42a, 42b), und dass bei Geradeausfahrt des Rollers die Bodenberührungspunkte der Räder (19a, 19b) und die Mittelachsen der Achszapfen (15,16) an deren Wurzel in einer senkrecht zur Längsmittelebene des Rollers liegenden Ebene liegen, wobei die Bodenberührungspunkte der Räder (19a, 19b) aus dieser senkrecht zur Längsmittelebene des Rollers liegenden ursprünglichen Ebene entgegen der Fahrtrichtung nach hinten wandern, wenn die Winkel (45a, 45b) gem. Fig.3 größer als 0° sind.
